# EUROPÄISCHE PATENTSCHRIFT

(11) **EP 0 887 680 B1**
(45) Veröffentlichungstag und Bekanntmachung des Hinweises auf die Patenterteilung: **04.10.2001**
(21) Anmeldenummer: 98115811.6
(22) Anmeldetag: 21.08.1998
(51) Int. Cl.: G02B 23/16

(54) **Vorrichtung zur gerichteten Abstrahlung und zum gerichteten Empfang modulierter Lichtwellen**
Device for directional transmission and reception of modulated light waves
Dispositif de transmission et de réception directionelle des ondes de lumière modulées

(30) Priorität: 21.12.1997 CH 293097
(43) Veröffentlichungstag der Anmeldung: 30.12.1998
(73) Patentinhaber: Contraves Space AG, 8052 Zürich (CH)
(72) Erfinder: Fischer, Edgard, Dr., 8555 Müllheim Dorf (CH); Sanvido, Saverio, 8152 Glattbrugg (CH); Herren, Andreas, 8121 Benglen (CH)
(74) Vertreter: Hotz, Klaus, Dipl.-El.-Ing./ETH Patentanwalt

(56) Entgegenhaltungen:
- EP-A- 0 796 829
- FR-A- 2 731 807
- US-A- 4 439 767
- W. J. Smith: "Modern Lens Design", McGraw-Hill, 1992, Seiten 296 - 299

## Beschreibung

Die vorliegende Erfindung betrifft eine Vorrichtung zur gerichteten Abstrahlung und zum gerichteten Empfang von modulierten Lichtwellen zwischen geostationären Satelliten, bzw. zwischen geostationären und erdnahen Satelliten, mittels eines Teleskops.

Faseroptische Kommunikationssysteme haben die leitungsgebundene Datenübertragung insbesondere über grosse Distanzen hinweg innerhalb weniger Jahre revolutioniert. So können heute bereits in Betrieb befindliche Systeme hinsichtlich der zur Verfügung stehenden Bandbreite als den bis dahin dominierenden Richtfunkanlagen in jeder Hinsicht überlegen angesehen werden. Lediglich die mobile Kommunikation vermag von diesem Fortschritt durch die leistungsfähigeren Festnetze nur mittelbar zu profitieren, da auch zelluläre

Funknetze auf einem Teil des Übertragungsweges schmalbandige und störanfällige Funkkanäle nützen müssen. Bei der Übertragung über oder zwischen Satelliten sind zudem nach wie vor weite Strecken zu überwinden, welche grosse Sendeleistungen und Antennen erzwingen, die wiederum dem Bestreben der Raumfahrt nach möglichst kompakten und leichten Systemen zuwiderlaufen. Daher wurden schon recht bald nach dem Siegeszug der faseroptischen Kommunikationstechnik Bestrebungen in Gang gesetzt, deren Vorteile mittels geeigneter Systeme zur optischen Kommunikation durch den freien Raum ebenfalls zu nutzen.

In der faseroptischen Kommunikationstechnik erwiesen sich speziell bei der Überbrückung grosser Distanzen neue systemimmanente Faktoren als begrenzend, insbesondere die Dispersion in dem zur Übertragung genutzten dielektrischen Wellenleiter und diverse nichtlineare Effekte seines Materials. Die optische Kommunikation im freien Raum wiederum bedeutete die Wiederkehr alter begrenzender Einflüsse der Funktechnik und drahtgebundenen Kommunikation. Dominierend waren hier nun wieder der Verlust an Signalleistung auf der Übertragungsstrecke und der Einfluss von Fremdsignalen. Die äussersten Grenzen der Energie eines zur Übertragung genutzten Symbols werden allerdings wie in der faseroptischen Kommunikation nicht in den das Phänomen des thermischen Rauschens beschreibenden Begriffen, sondern In Photonen pro Bit ausgedrückt.

Zur sicheren Übertragung von Daten mittels Intensitätsmodulation sind beispielsweise bei einer Fehlerquote von 1/1'000'000'000 10.5 Photonen pro Bit inhärent erforderlich (J. S. Senior, Optical Fiber Communications, Principles and Practice, Second Edition, Prentice Hall, Seiten 469 bis 471).

Bessere Ergebnisse sind mit Puls-Positionsmodulation sowie diversen kohärenten Techniken, insbesondere Verfahren mit homodyner Überlagerung, erzielbar. Die besten realisierten Ergebnisse sind mittels homodyner Überlagerung gewonnen worden (weniger als 30 Photonen pro Bit). Da für weltraumgestützte Systeme eine klare Anforderung hinsichtlich niedrigen Energieverbrauchs besteht, sollte ein optisches System zur Datenübertragung zwischen weit voneinander entfernten geostationären Satelliten Lichtwellen durch eine möglichst grosse und sehr genau ausgerichtete Apertur aussenden und empfangen. Diese wiederum lässt sich ab einer gewissen Grösse unter Beibehaltung eines niedrigen Gewichts nur in Form eines Spiegelteleskops realisieren. Spiegelteleskope sind in sogenannt Koaxialer Bauweise in Zahlrichen Ausführungsformur bekannt, genannt sein die Systeme nach Gregory, Cassegrain sowie Schmidt (Eugene Hecht, Optics, Second Edition, Addison-Wesley Publishing Company, Reading, Massachusetts, USA, Seiten 197, 198).

Die Druckschrift mit dem Titel "Modern Lens Design", W.J. Smith, McGraw-Hill, 1992, S. 296 - 299, beschreibt den theoretischen Aufbau eines Schiefspiegelteleskops mit drei Spiegeleinheiten. Konstruktive Einzelheiten zur Realisierung eines kompletten Teleskops, insbesondere eines Teleskops, das für die Beförderung und den Einsatz im Weltraum geeignet ist, gehen nicht aus dieser Druckschrift hervor.

Allen gemeinsam ist der systembedingte Nachteil der teilweisen zentralen Abdeckung der Apertur durch Fangspiegel und deren Aufhängevorrichtung. Hier muss ein Kompromiss zwischen mechanischer Festigkeit und Verlusten durch Aperturabdeckung gefunden werden.

Im allgemeinen ist auch eine zusätzliche Blende erforderlich, welche die durch den Fangspiegel und dessen Aufhängung begünstigte Reflexion von Streulicht in die Richtung des zu empfangenden Lichts verhindert. Die gleichzeitige Verwendung eines solchen Teleskops zur Ausstrahlung einer Lichtwelle sowie des Empfangs einer entgegengesetzt einfallenden Lichtwelle bedingt im allgemeinen signifikante Nachteile, da genannter Fangspiegel samt Aufhängevorrichtung einen Teil der leistungsstarken gesendeten Lichtwelle in Richtung der gleichzeitig einfallenden Lichtwelle reflektiert und durch Überlagerung zu Störungen führt. Unter Hinnahme starker Einbussen hinsichtlich der Abbildungsqualität kann dieses Problem durch Verwendung eines von Kutter vorgeschlagenen Schiefspiegelteleskops umgangen werden. Allerdings führen die genannten Abbildungsfehler zur Vergeudung von wertvoller Sendeleistung.

Die im folgenden beschriebene Erfindung dient somit zur Überwindung der geschilderten Nachteile des Stands der Technik, indem ein Schiefspiegelteleskop zur Anwendung kommt, welches frei von Abbildungsfehlern, eine gleichzeitige bidirektionale Nutzung zur Abstrahlung sowie zum Empfang einer Lichtwelle erlaubt.

Dies wird mit mit einer Vorrichtung gemäss Anspruch 1 erreicht.

Das genannte Schiefspiegelteleskop ist aus mehreren Brechkraft ausübenden eine beugungsbegrenzt abbildende Oberfläche aufweisenden Spiegeln aufgebaut, die im Gegensatz zu dem von Kutter entwickelten System eine gemeinsame optische Achse aufweisen. Die Besonderheit des optischen Systems besteht darin, dass die Flächen der einzelnen Spiegel als aus auf einer gemeinsamen optischen Achse angeordneten achsensymmetrischen Spiegeln ausgeschnittene Teilflächen vorstellbar sind. Das Ausschneiden von Teilflächen erzeugt die eigentliche Struktur eines Schiefspiegelteleskops, ist aber auch zur Vermeidung der gegenseitigen Abschattung und aufgrund der Unmöglichkeit von Überschneidungen von Spiegelflächen notwendig.

Eine weitere Besonderheit der Erfindung liegt in der Struktur des die Spiegel des Teleskops beinhaltenden Gehäuses. So ist die relative Position der Spiegel zueinander, sofern zur Erhaltung der Abbildungsqualität erforderlich, durch ein gesondertes Stützgerüst aus Invar oder einem vergleichbaren Material stabilisiert. Auf dieses Mittel kann bei Verwendung eines mechanisch und thermisch hinreichend stabilen Gehäuses verzichtet werden. Das Gehäuse des Schiefspiegelteleskops wird in der Erfindung aus einer besonders leichten und thermisch stabilen Struktur zusammengesetzt. Diese besteht aus einer aus dem Flugzeugbau bekannten Aluminium-Wabenstruktur, welche beidseitig durch eine Schicht aus wärmedehnungsarmem Material verschlossen ist. Neben dem bewährten Invar ist für diese Schichten in der vorliegenden Erfindung erstmals die wesentlich leichtere Glaskeramik Zerodur verwendet worden, welcher gegenüber Invar ausserdem eine erheblich geringere Wärmedehnung aufweist. Weiterhin erstmals wurde für denselben Zweck ein Kunststoff verwendet. Es handelt sich um einen sehr temperaturfesten Thermoplast (Peak), der mit einem hohen Anteil stabilisierender Glasfaserabschnitte vermengt ist, welche für hinreichende mechanische und thermische Stabilität sorgen.

Das Gehäuse des Teleskops ist zudem so ausgeführt, dass auf relativ kurzer Länge eine durch das Fehlen eines Fangspiegels samt Haltevorrichtung weniger dringend notwendige Blende bereits integriert ist.

Ein wesentlicher Vorteil der Erfindung liegt im geringen Gewicht des in um zwei oder mehreren Achsen drehbar gelagerten Teleskops, insbesondere, wenn aufgrund der günstigen statischen Eigenschaften des gewichtssparend aus in genannter Sandwichbauweise mit Aluminiumwaben gefertigten Platten zusammengesetzten Gehäuses auf ein stützendes Gerüst im Inneren des Gehäuses verzichtet werden kann, was besonders dann möglich ist, wenn die Masse der verwendeten Spiegelkörper entsprechend eines weiteren Merkmals der Erfindung durch mittels Bohrungen in deren lichtabgewandten Seite angebrachten Ausnehmungen auf ein durch Festigkeitsanforderungen gegebenes Minimum reduziert wird.

Ein weiterer Vorteil ergibt sich durch die Anwendung eines fehlerfrei abbildenden Schiefspiegelteleskops dadurch, dass entsprechend den meisten mit Linsen arbeitenden Teleskopen mehr als zwei Brechkraft beinhaltende Spiegel verwendet werden können, wodurch die bei refraktiven, vollständig mit Linsen ausgestatteten Systemen erzielbaren Vorteile sich auf mit Spiegeln ausgestattete optische Systeme übertragen lassen.

Die erwähnten Nachteile werden nicht durch eine aus der FR-2 731 897 A (SEREL) bekannte Vorrichtung überwunden, die ein Joch aufweist, das nicht speziell für eine Anwendung bei Satelliten gedacht ist. Zudem handelt es sich bei den im Gehäuse dieser Vorrichtung montierten optischen Bauteilen um für sich vollständige, komplette optische Apparate, die keineswegs zu einer Gewichtseinsparung führen.

Weitere Einzelheiten, Merkmale und Vorteile der Erfindung ergeben sich nicht nur aus den Ansprüchen und diesen zu entnehmenden Merkmalen - für sich und/oder in Kombination, sondern auch aus der nachfolgenden Beschreibung bevorzugter Ausführungsbeispiele.

Es zeigen:
- **Fig. 1**: zwei schematische Skizzen von verschiedenen Ausführungen von Schiefspiegel-Teleskopen,
- **Fig. 2**: die besondere optische Konstruktion des angewendeten Schiefspiegel-Teleskops,
- **Fig. 3**: einen Quer- sowie einen sagittalen Schnitt durch ein das Schiefspiegel-Teleskop beinhaltendes tragendes Leichtbau-Gehäuse,
- **Fig. 4**: einen Quer- sowie einen sagittalen Schnitt durch ein das Schiefspiegel-Teleskop beinhaltendes tragendes Leichtbau-Gehäuse samt eines stabilisierenden Stützwerks,
- **Fig. 5**: zwei Ausführungsbeispiele von stumpfwinkligen Verbindungen zwischen den Segmenten des verwendeten Leichtbau-Gehäuses,
- **Fig. 6**: ein Ausführungsbeispiel einer rechtwinkligen Verbindung zwischen zwei Segmenten des verwendeten Leichtbau-Gehäuses,
- **Fig. 7**: ein Ausführungsbeispiel einer spitzwinkligen Verbindung zwischen zwei Segmenten des verwendeten Leichtbau-Gehäuses,
- **Fig. 8**: die Aussenansicht eines ein Schiefspiegel-Teleskop beinhaltenden optischen Front-Ends eines optischen Kommunikationssystems,
- **Fig. 9**: eine Explosionsdarstellung des optischen Front-Ends.

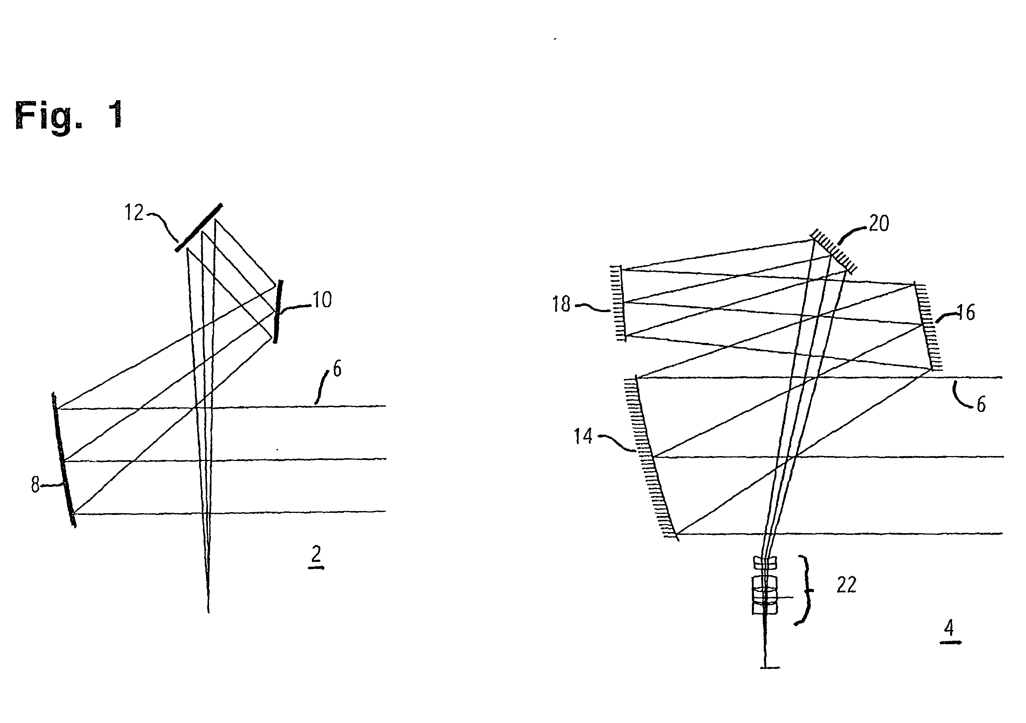

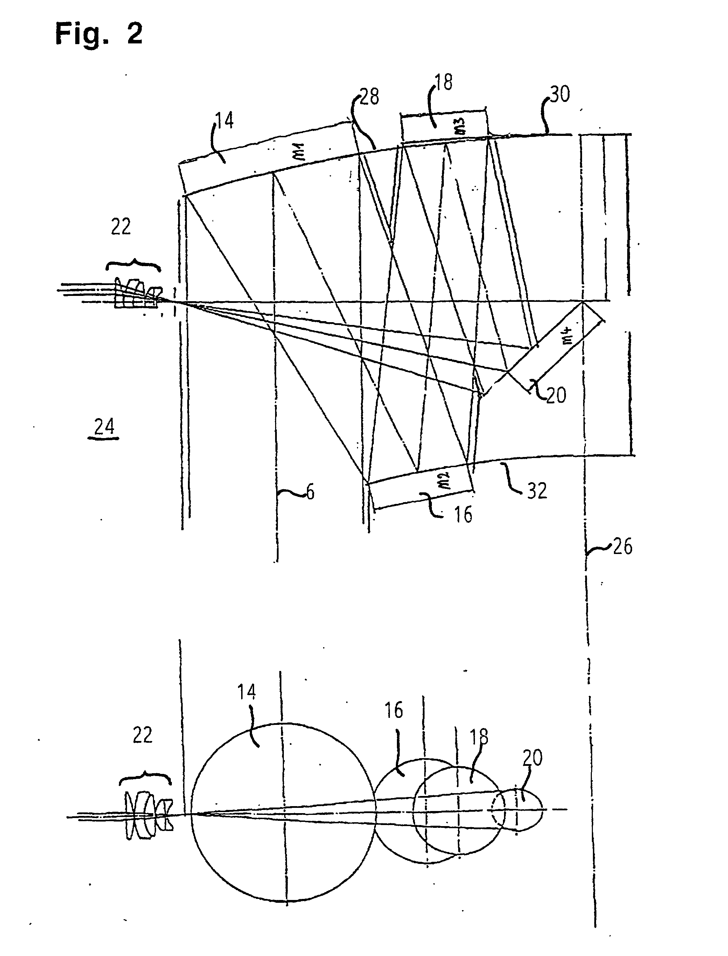

**Fig. 1** zeigt die von Kutter entwickelte Konstruktion eines Schiefspiegel-Teleskops **2**, welche aus in Bezug zum einfallenden Strahlenbündel **6** seitlich zueinander versetzten Brechkraft aufweisenden Spiegeln **8** und **10** sowie einem flachen Umlenkspiegel bbesteht. Die eine Flächenkrümmung bzw. Brechkraft aufweisenden Spiegel **8** und **10** besitzen im allgemeinen optische Achsen, welche nicht parallel zum einfallenden Lichtbündel b sind. Dadurch ergeben sich die bei grösserer Abweichung von der optischen, Achse zwingenden Abbildungsfehler. Dieser Mangel ist in einer verbesserten Konstruktion **24 (Fig. 2)** behoben, indem alle mit Brechkraft versehenen Spiegel **14, 16**, und **18** eine zum einfallenden Strahlenbündel **6** parallele sowie miteinander gemeinsame optische Achse **26** aufweisen. Diese gekrümmten Spiegel sind somit Ausschnitte von einander verdeckenden und überschneidenden rotationssymmetrischen Spiegelflächen mit gemeinsamer Symmetrieachse, was noch deutlicher aus deren in **Fig. 2** im Sagittalschnitt **24** dargestellten Fortsetzungen **28, 30** und **32** hervorgeht.

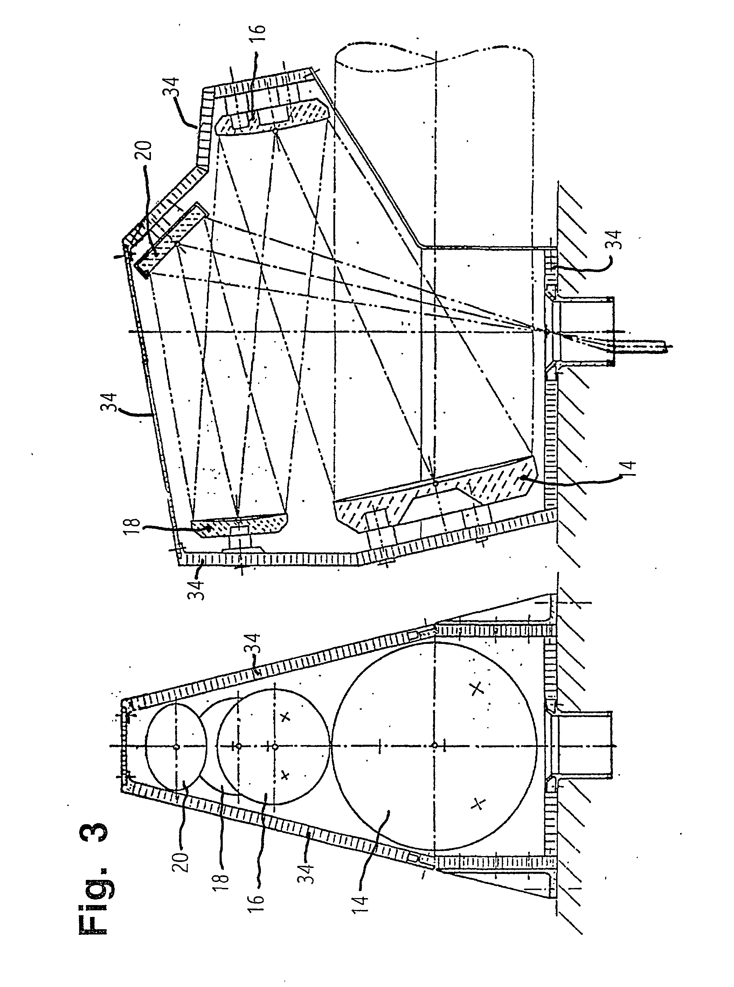

Ein planarer Spiegel **20** lenkt das Strahlenbündel in eine refraktive Optik **22,** nach welcher im allgemeinen eine entsprechende quantenoptische Vorrichtungen beinhaltende optische Bank folgt. Zwecks Abschirmung von seitlich einstreuendem Licht sind die Spiegel **14, 16, 18** und **20** in ein aus Platten **34** verschiedener Stärke zusammengefügtes Gehäuse nach **Fig. 3** eingesetzt.

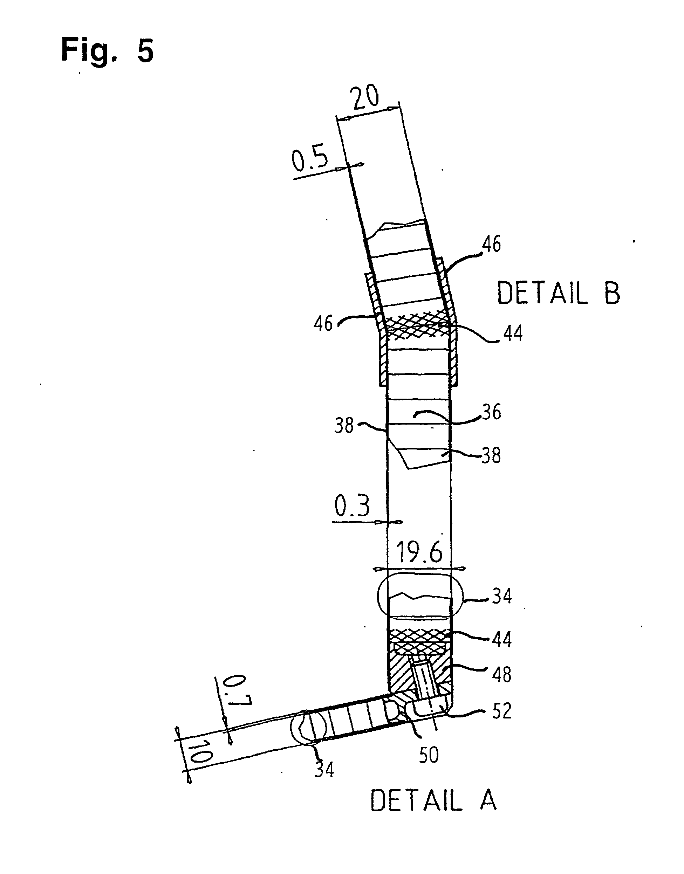

Die Platten **34** sind, wie in **Fig. 5** dargestellt, nach einer aus dem Flugzeugbau bekannten Ausführungsform aus einer hexagonal wabenartigen Struktur **36** gefertigt, welche zwischen zwei dünnen Schichten **38** liegt und mit diesen durch Klebung oder andere Techniken verbunden ist. Während die wabenartige Struktur **36** aus Aluminium bestehen kann, sind für die dünnen Schichten **38** Materialien vorgesehen, die eine geringe Wärmedehnung aufweisen. Neben bewährten Werkstoffen wie z.B. Invar können dies auch andere geeignete Werkstoffe sein, wie z.B. Zerodur®, wodurch sich neben noch geringerer Wärmedehnung auch eine erhebliche Gewichtserspamis ergibt.

Neben der Glaskeramik Zerodur® können auch Kunststoffe verwendet werden. Thermoplaste ermöglichen eine einfache Verarbeitung und sind bei entsprechend hoher Verarbeitungstemperatur auch noch bei höheren Temperaturen einsetzbar. Durch Beimischung von Glasfaserabschnitten modifizierte Werkstoffe erfüllen sowohl mechanische als auch thermische Anforderungen für den Einsatz im Weltraum. So ist die Wärmedehnung ausserordentlich gering, die Temperaturfestigkeit und die mechanische Festigkeit hinreichend. Eine geringe Wärmedehnung kann als Eigenschaft insbesondere dadurch optimiert werden, dass dem Kunststoff ein hoher Anteil an Glasfaserabschnitten oder Faserabschnitten aus anderen Werkstoffen beigemengt wird, wobei das für die Faserabschnitte verwendete Glas oder sonstiger Werkstoff niedrigste Wärmedehnung aufweist.

Glasfasern oder Fasern aus anderen Werkstoffen können zudem innerhalb einer dünnen Schicht **38** in Form einer Matrixstruktur vorhanden sein. Um auch die Körper der Spiegel **14, 16, 18** und **20** sowie alle weiteren Spiegel in ihrer Masse möglichst gering zu halten, können diese in ihrer lichtabgewandten Seite mit zahlreichen, für deren Befestigung am Gehäuse nicht unbedingt notwendigen Bohrungen versehen werden, welche in regelmässiger Ausführung in angenäherter Weise Ausnehmungen mit ebenfalls hexagonal wabenartiger Struktur ergeben.

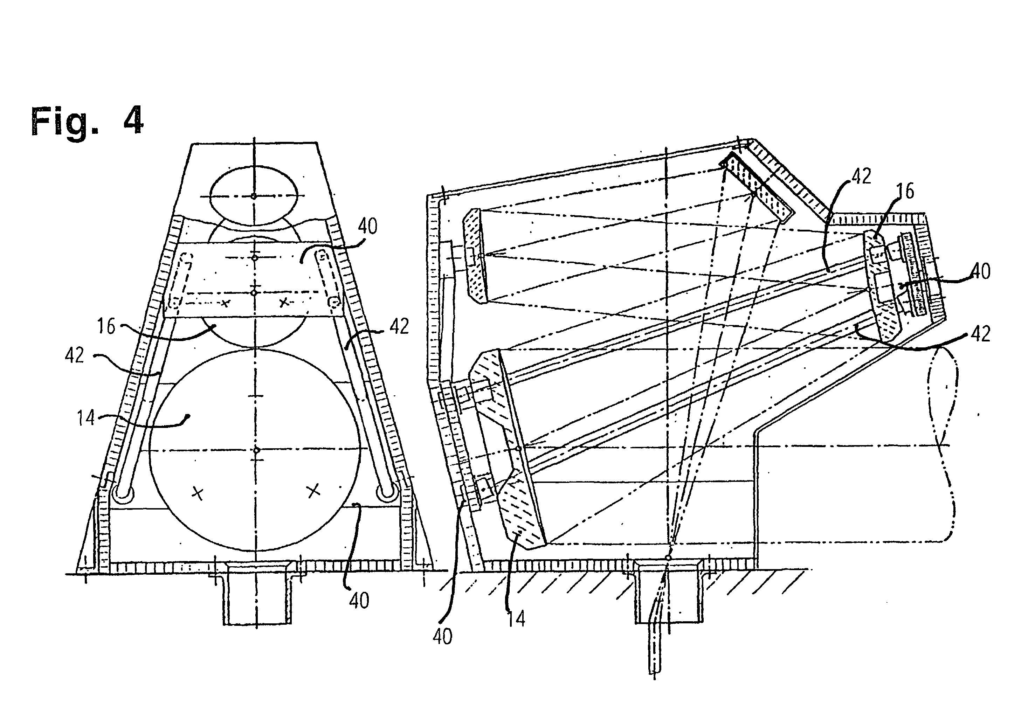

Da die genaue Einhaltung der relativen Position der Spiegel **14** und **16** zueinander für die Qualität der optischen Abbildung sehr kritisch ist, kann deren genaue Einhaltung zusätzlich durch stützende Platten **40** und Streben **42** nach **Fig. 4** aus einem Material mit geringer Wärmedehnung gewährleistet werden. In **Fig. 5** sind stumpfwinklige Verbindungen zwischen Platten **34** dargestellt.

Einerseits kann eine Verbindung zwischen zwei Platten in endgültiger Weise durch eine Verklebung **44** an jeweils entsprechend angeschrägten Plattenrändern erfolgen, der durch aufgeklebtes Stützmaterial **46** zusätzliche Stabilität verliehen wird. Andererseits kann eine Verbindung auch mittels einer Verklebung **44** zwischen einer in gewissen Abständen mit Gewindelöchem versehenen Schiene **48** und der Platte **34** erfolgen, wobei eine korrespondierende, mit Löchern versehene und mit der zweiten zu verbindenden Platte 34 verklebte Schiene **50** mittels Gewindeschrauben **52** an der Schiene **48** befestigt ist.

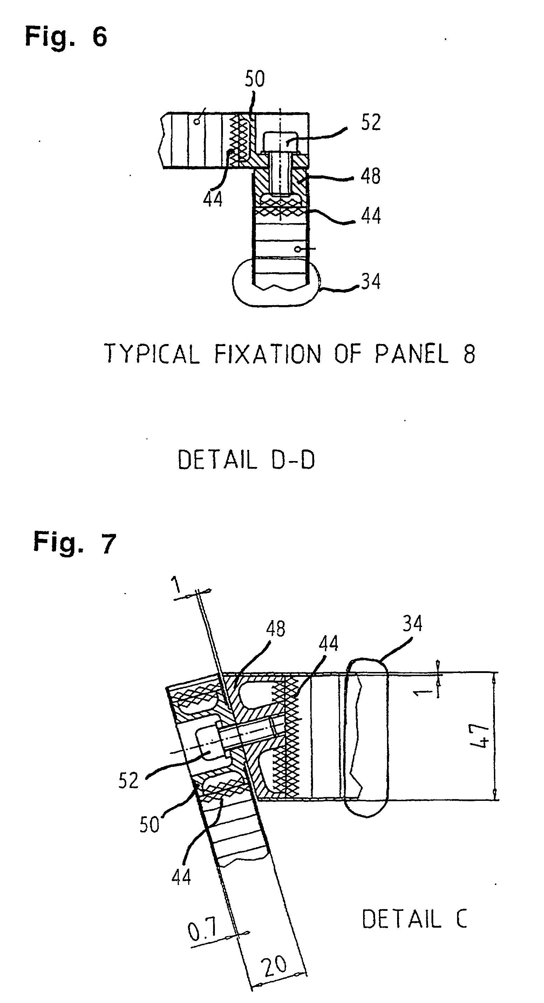

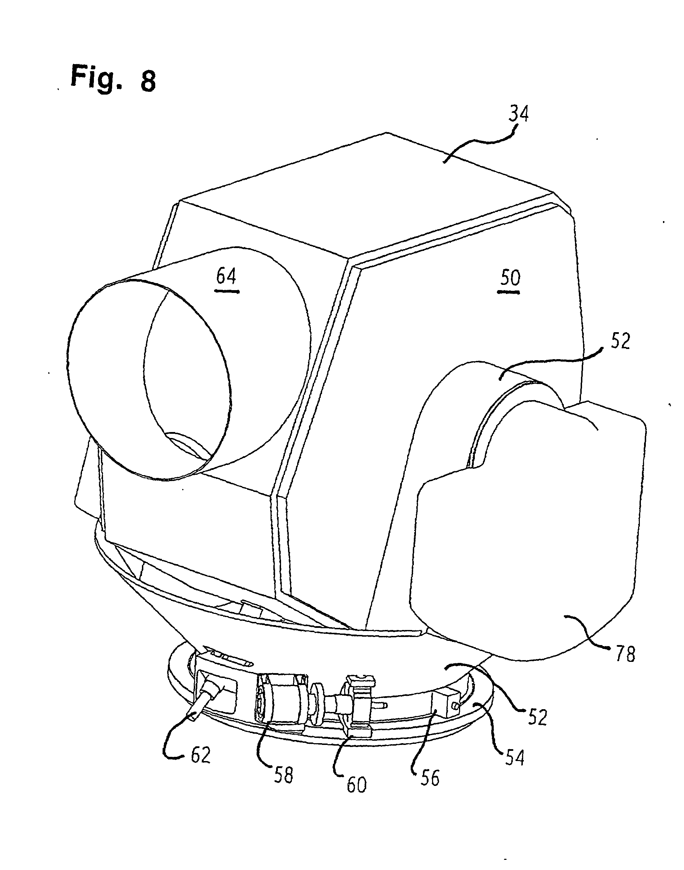

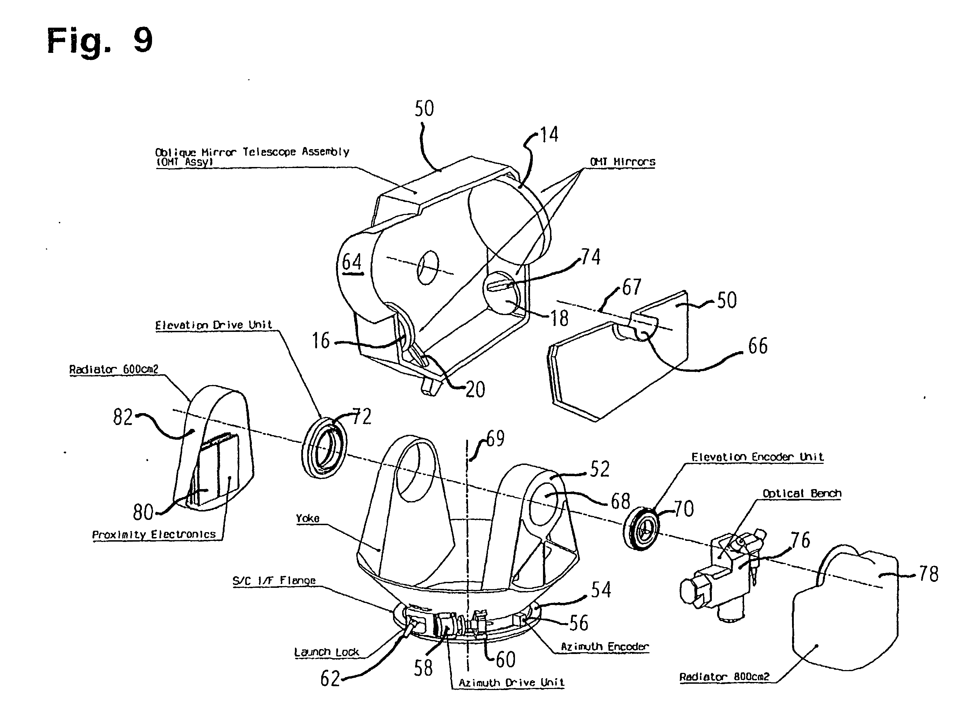

**Fig. 6** und **Fig. 7** zeigen eine entsprechende rechtwinklige bzw. spitzwinklige Verbindung. Die Integration eines Schiefspiegel-Teleskops der anhand von **Fig. 3** und **Fig. 4** beschriebenen Art innerhalb eines Front-Ends eines optischen Freiraum-Kommunikationssystems ist in **Fig. 8** und **Fig. 9** dargestellt. Das aus Platten **34** zusammengesetzte Gehäuse **50** lagert in einem Joch **52**, welches in einem Ring **54** drehbar gelagert ist. Auf dem Ring **54** sind ein Drehwinkelgeber **56** zur Ermittlung des aktuell eingestellten Drehwinkels um eine Azimutachse **69**, ein über ein Getriebe **60** auf den Ring **54** wirkender Motor **58** sowie eine für Ruhephasen vorgesehene alle Drehbewegungen blockierende Sperre **62** angebracht.

Die Sperre **62** dient zur Sicherung der gesamten Vorrichtung bei Verwendung auf einem Satelliten, welcher während des Raketenstarts extremer Beschleunigung ausgesetzt ist. Zudem ist eine zusätzlich zum Gehäuse **50** wirkende Blende **64** am Gehäuse **50** angebracht. Durch am Gehäuse **50** angebrachte Hohlzapfen **66** ist das Teleskop um die Elevationsachse drehbar, während gleichzeitig durch das innere eines der beiden Hohlzapfen **66** mittels eines planen Umlenkspiegels **74** Licht in das Teleskop eingekoppelt bzw. herausgeführt wird. Die hierzu notwendigen Vorrichtungen sind in einer diesem Hohlzapfen **66** benachbart gelagerten auf dem Joch **52** befestigten optischen Bank **76** zusammengefasst. Diese beschirmende Abdeckung **78** nimmt von der optischen Bank **76** erzeugte Wärme auf und strahlt diese in den freien Raum ab. Denselben Zweck erfüllt eine weitere Abdeckung **82**, welche systemnahe Komponenten **80** der Elektronik beschirmt und kühlt. Weiterhin sind im Joch ein auf den zweiten Hohlzapfen **66** wirkender Antrieb **72** zur Einstellung des Elevationswinkels des um eine Elevationsachse **67** gedrehten Teleskops sowie gegenüberliegend im anderen Arm des Jochs **52** ein Messgeber **70** zu dessen Erfassung angebracht. Der Messgeber **70** besteht aus zwei zueinander verdrehbaren Ringen, die jeweils mit dem Hohlzapfen **66** bzw. dem Joch **52** in festem Kontakt stehen, wobei die Öffnung des Jochs **66** in keinem Fall vollständig verdeckt wird, um über den Umlenkspiegel **74** den Ein- bzw. Austritt von Licht zu ermöglichen. Der Messgeber **70** und der Antrieb **72** dienen als Sensor bzw. Stellglied für eine in den systemnahen Komponenten **80** angeordnete Regelschaltung. Weitere in den systemnahen Komponenten 80 angeordnete Baugruppen kontrollieren die Temperatur eines quantenoptischen Verstärkers sowie die Feinausrichtung und das Vorhaltemass des zu sendenden Lichtstrahls.

Die optische Bank **76** ist am Joch **52** befestigt und wird mit diesem azimutal mitgedreht, während eine Änderung der Abstrahlungs- bzw. Empfangsrichtung in der Elevation durch Mitdrehung des im in der Elevation gedrehten Teleskop angebrachten Umlenkspiegels **74** geschieht, was angesichts der Verwendung von zirkular polarisiertem Licht zur Übertragung keine Anpassung einer linearen Polarisationsrichtung erfordert. Dies stellt für den speziellen Anwendungsfall der Verbindung zwischen zwei sich auf der geostionären Urnlaufbahn befindenden Satelliten einen günstigen Kompromiss dar, da durch Änderung des Elevationswinkels des im Gehäuse **50** befindlichen Teleskops eine grosse Anzahl von benachbarten Satelliten erreicht werden kann, wobei nur geringe Anpassungen des mit dem Motor **58** über das Getriebe **60** sowie den Drehwinkelgeber **56** eingestellten Azimutwinkels erforderlich sind. Beschränkt sich dessen Stellbereich somit insgesamt auf weniger als **10** Grad, ist keine besondere drehbewegungsfähige Kabelführung vom Körper eines Satelliten zur optischen Bank **76** oder zu systemnahen Komponenten **80** der Elektronik erforderlich.

## Patentansprüche

1. Vorrichtung zur gerichteten Abstrahlung und zum gerichteten Empfang von modulierten Lichtwellen zwischen geostationären Satelliten, bzw. zwischen geostationären und ernahen Satelliten, mittels eines Teleskops, beinhaltend ein Gehäuse (**50**), gefertigt aus Platten (**34**) mit einer von wärmedehnungsarmen dünnen Schichten (**38**) eingeschlossenen Wabenstruktur (**36**) mit darin eingebautem Schiefspiegelteleskop (**2**), gelagert in einem symmetrisch ausgeführten Joch (**52**), wobei das Joch (**52**) auf einem Ring **(54)** drehbar gelagert ist, wobei das Schiefspiegelteleskop **(2)** aus wenigstens drei gekrümmten Spiegeln **(14, 16, 18)** besteht, die durch Teilflächen von Flächen mit einer gemeinsamen Rotationssymmetrieachse **(26)** gebildet sind, wobei die drei gekrümmten Spiegel **(14, 16, 18)** eine zu einem einfallenden Strahlenbündel **(6)** parallele sowie miteinander gemeinsame optische Achse **(26)** aufweisen, und wobei die genaue Einhaltung der relativen Position der Spiegel zueinander durch stützende Platten (**40**) und Streben (**42**) aus einem Material mit geringer Wärmedehnung gewährleistet ist.

2. Vorrichtung nach Anspruch 1, **dadurch gekennzeichnet, dass** am Gehäuse (**50**) angebrachte Hohlzapfen (**66**) zur Ein- und Ausleitung von Licht in das Schiefspiegelteleskop (**2**) dienen.

3. Vorrichtung nach Anspruch 1, **dadurch gekennzeichnet, dass** am Gehäuse (**50**) zusätzlich eine Blende (**64**) zur Abschirmung des Strahlenbündel (**6**) angebracht ist.

4. Vorrichtung nach einem der vorangegangenen Ansprüche, **dadurch gekennzeichnet, dass** mindestens ein Spiegel (**14, 16, 18, 20**) auf seiner lichtabgewandten Seite durch Bohrungen mit Ausnehmungen versehen ist, deren regelmässige Anordnung näherungsweise die Form einer hexagonal wabenartigen Struktur besitzt.

5. Vorrichtung nach einem der vorangegangenen Ansprüche, **dadurch gekennzeichnet, dass** mit dem Joch **(52)** eine optische Bank **(76)** fest verbunden ist, **dass** zur Einstellung eines Azimuthwinkels ein Motor **(58)**, ein Getriebe **(60)** und ein Drehwinkelgeber **(56)** vorhanden sind, und **dass** für den Azimuthwinkel ein Stellbereich von weniger als 10° vorgesehen ist.

6. Vorrichtung nach Anspruch 1, **dadurch gekennzeichnet, dass** die dünnen Schichten **(38)** der Wabenstruktur **(36)** aus einer Glaskeramik oder aus einem Kunststoff, vorzugsweise aus einem entsprechend optimierten Thermoplast, gefertigt sind.

7. Vorrichtung nach Anspruch 6, **dadurch gekennzeichnet, dass** ein Kunststoff verwendet wird, der durch Beifügung von Faserabschnitten oder Einbettung von Fasermatrizen aus einem hochfesten oder wärmedehnungsarmen Material in seiner mechanischen Festigkeit bei geringer Wärmedehnung verbessert wird.

## Claims

1. A device for the directional transmission and reception of modulated light waves between geostationary satellites, or between geostationary and near-earth satellites, by means of a telescope, comprising a housing (50), made of plates (34) with a honeycomb structure (36) enclosed by thin layers (38) having poor thermal expansion and with an oblique mirror telescope (2) fixed therein, the latter being carried in a symmetrically designed yoke (52), in which case the yoke (52) is rotatably mounted on a ring (54), the oblique mirror telescope (2) consisting of at least three curved mirrors (14, 16, 18) which are formed by partial areas of surfaces with a common axis of rotational symmetry (26), the three curved mirrors (14, 16, 18) having a shared optical axis (26) which runs parallel to an incident bundle of rays (6), and the position of the mirrors in relation to one another being precisely maintained by means of supporting plates (40) and struts (42) made of a material having low thermal expansion.

2. A device according to Claim 1,
**characterized in that**
hollow pegs (66), fixed to the housing (50), serve to direct light into and out of the oblique mirror telescope (2).

3. A device according to Claim 1,
**characterized in that**
a screen (64) for shielding the bundle of rays (6) is also mounted on the housing (50).

4. A device according to one of the preceding claims,
**characterized in that**
at least one mirror (14, 16, 18, 20), on its side facing away from the light, is provided, by means of drilling, with recesses, the regular arrangement of these recesses approximately taking the form of a hexagonal honeycomb structure.

5. A device according to one of the preceding claims,
**characterized in that**
an optical bench (76) is firmly connected to the yoke (52); **in that** a motor (58), a gear (60) and an azimuth indicator (56) are provided for setting an azimuth angle; and **in that** a correcting range of less than 10° is provided in respect of the azimuth angle.

6. A device according to Claim 1,
**characterized in that**
the thin layers (38) of the honeycomb structure (36) are made of a glass ceramic or of a synthetic material, preferably of an appropriately optimized thermoplastic.

7. A device according to Claim 6,
**characterized in that**
a synthetic material is used, which is improved as to its mechanical strength with low thermal expansion by the addition of fibre cuttings or the embedding of fibre matrices made of a high-strength material or one which has poor thermal expansion.

## Revendications

1. Dispositif d'émission dirigée et de réception dirigée d'ondes lumineuses modulées entre des satellites géostationnaires, ou entre des satellites géostationnaires et des satellites proches de la terre, au moyen d'un télescope, comportant un logement (50) fabriqué à partir de plaques (34) possédant une structure alvéolaire (36) bloquée par des couches minces (38) présentant une faible dilatation thermique, et dans laquelle est incorporé un télescope à miroirs obliques (2), logé dans une armature fixe (52) conçue de façon symétrique, l'armature fixe (52) étant logée de façon pivotante dans une bride (54), le télescope à miroirs obliques (2) se composant d'au moins trois miroirs courbés (14, 16, 18) qui sont formés par des surfaces partielles de surfaces possédant un axe de symétrie de rotation (26) commun, les trois miroirs courbés (14, 16, 18) présentant un axe optique (26) parallèle au faisceau faisant incidence (6) et commun à tous, le respect précis de la position relative des miroirs l'un par rapport à l'autre étant garanti par des plaques de soutien (40) et des traverses (42) réalisées dans un matériau présentant une faible dilatation thermique.

2. Dispositif selon la revendication 1, **caractérisé en ce que** des tourillons creux (66) appliqués dans le logement (50) servent à l'entrée et à la sortie de la lumière dans le télescope à miroirs obliques (2).

3. Dispositif selon la revendication 1, **caractérisé en ce qu'**un diaphragme (64) est appliqué en supplément sur le logement (50) pour protéger le faisceau (6).

4. Dispositif selon l'une des revendications précédentes, **caractérisé en ce qu'**au moins un miroir (14, 16, 18, 20) est pourvu sur son côté opposé à la lumière d'évidements par des perçages, dont la disposition régulière possède approximativement la forme d'une structure alvéolaire hexagonale.

5. Dispositif selon l'une des revendications précédentes, **caractérisé en ce qu'**un banc optique (76) est relié de façon fixe à l'armature fixe (52), **en ce que** sont présents pour le réglage d'un angle azimutal un moteur (58), un engrenage (60) et un capteur d'angle de rotation (56), et **en ce qu'**est prévue pour l'angle azimutal une zone angulaire de moins de 10°.

6. Dispositif selon la revendication 1, **caractérisé en ce que** les couches minces (38) de la structure alvéolaire (36) sont fabriquées en vitrocéramique ou dans un matériau synthétique, de préférence un matériau thermoplastique optimisé de façon correspondante.

7. Dispositif selon la revendication 6, **caractérisé en ce qu'**on utilise un matériau synthétique qui est amélioré dans sa rigidité mécanique avec une faible dilatation thermique par mélange additionnel de segments de fibres ou par incorporation de matrices de fibres d'un matériau très résistant ou de faible dilatation thermique.
